Europäisches Patentamt

European Patent Office

Office européen des brevets

(19)

(11) Veröffentlichungsnummer: **0 214 954**
A2

(12) # EUROPÄISCHE PATENTANMELDUNG

(21) Anmeldenummer: 86890239.6

(22) Anmeldetag: 27.08.86

(51) Int. Cl.⁴: **G 01 B 11/02**

(30) Priorität: 11.09.85 AT 2654/85

(43) Veröffentlichungstag der Anmeldung:
18.03.87 Patentblatt 87/12

(84) Benannte Vertragsstaaten:
BE CH DE FR GB IT LI LU NL SE

(71) Anmelder: RSF-Elektronik Gesellschaft m.b.H.

A-5121 Tarsdorf 93(AT)

(72) Erfinder: Rieder, Heinz
Riedersbach 90
A-5120 St. Pantaleon(AT)

(72) Erfinder: Schwaiger, Max

A-5121 Ostermiething 298(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher Spittelwiese
7
A-4020 Linz(AT)

(54) Messvorrichtung zur berührungslosen Bestimmung von Massen nach dem Schattenbildverfahren.

(57) Eine Meßvorrichtung zur berührungslosen Bestimmung von Maßen, der Lage oder der Abstände von Objekten (37, 44) nach dem Schattenbildverfahren besitzt eine Abtasteinrichtung zur relativen Verstellung des von einem Laser (3) abgegebenen Laserstrahles (7a, 8a) von dem einen Rand her über eine Meßfläche (13) und eine der Meßfläche (13) nachgeordnete Empfangseinrichtung (14, 17) für den Laserstrahl (7a, 8a) mit einem auf die Abschattung des Laserstrahles (7a, 8a) empfindlichen Detektor (15, 18), der einen Meßkreis (32, 34, 35) steuert. Zur Erzielung einer einfachen Gesamtkonstruktion bei vielseitiger Anwendbarkeit und im Bedarfsfall großer Meßfläche sind der verstellbare, abstrahlende Teil (12, 16) der Abtasteinheit und ein zugeordneter Aufnahmeteil (14, 17) der den Detektor (15, 18) enthaltenden Empfangseinrichtung parallel zueinander synchron und normal zur Richtung des Laserstrahles (7a, 8a) innerhalb der Meßfläche (13) verstellbar angeordnet. Wenigstens der abstrahlende oder aufnehmende Teil (12, 16) ist mit einem Linearmeßsystem (30, 31) gekuppelt, dessen zugehörige Anzeige- oder Auswertungseinheit (34, 35) als Teil des Meßkreises vom Detektor (15, 18) gesteuert ist.

FIG.2

0214954

## Meßvorrichtung zur berührungslosen Bestimmung von Maßen nach dem Schattenbildverfahren

Die Erfindung betrifft eine Meßvorrichtung zur berührungslosen Bestimmung von Maßen und/oder der Lage bzw. der Abstände von Objekten, insbesondere Werkstücken, nach dem Schattenbildverfahren, mit einer Abtasteinrichtung zur relativen Verstellung des von einem Laser abgegebenen Laserstrahles von dem einen Rand her über eine Meßfläche in der durch den Laserstrahl und die Verstellrichtung definierten Abtastebene und einer der Meßfläche nachgeordneten Empfangseinrichtung für den Laserstrahl mit einem auf die Abschattung des Laserstrahles empfindlichen Detektor, der einen Meßkreis steuert.

Meßvorrichtungen dieser Art können zur Bestimmung der Absolutmaße von mit dem Laserstrahl abgetasteten Objekten, aber auch zur Toleranzmessung, Rundheitsüberprüfung an drehenden Werkstücken, zur Formmessung bzw. Abnützungsvermessung verwendet werden. Ferner werden Meßvorrichtungen zur Lagemessung und zur Abstandsmessung von wenigstens zwei Objekten eingesetzt.

Alle bekannten Meßvorrichtungen der gegenständlichen Art verwenden zur Verstellung des vom Laser abgegebenen Laserstrahles dem Prinzip nach gleiche oder ähnliche Ablenkeinrichtungen, nämlich in den Strahlengang des Lasers eingeschaltete, mechanisch verschwenkte oder gedrehte Reflektoren in Form von Schwingspiegeln oder reflektierenden Prismen bzw. drehend angetriebenen, mit ihren Außenflächen voll reflektierenden, mehrseitigen Prismen, die den Laserstrahl schwenkend ableiten. Dieser schwenkende Laserstrahl trifft auf eine Optik, in deren Brennpunkt sich die reflektierende Fläche des Reflektors bewegt, so daß der Laserstrahl die Optik parallel zu deren Achse gerichtet verläßt und die Abtastung mit parallelen Strahlen erfolgt. Empfangsseitig ist eine entsprechende Optik vorgesehen, in deren Brennpunkt ein Photodetektor angeordnet ist. Dem Prinzip nach wird die Zeit der Abschattung des verstellten Laserstrahles durch einen im Abtastbereich befindlichen Gegenstand ermittelt und daraus beispielsweise der Durchmesser dieses Gegenstandes errechnet.

Die Anordnung ist äußerst aufwendig, da praktisch der Durchmesser jeder Optik wenigstens der Breite des Abtastbereiches entsprechen muß. Da auch ein feingebündelter Laserstrahl einen endlichen Durchmesser hat, kann der Reflektor bzw. Drehspiegel nicht im ganzen Reflexionsbereich für den Laserstrahl im Brennpunkt der Optik liegen. Bei Verwendung von Spiegeln ergeben sich überdies in den verschiedenen Neigungen des Spiegels unterschiedlich dicke Eindringschichten für den Laserstrahl bis zur Reflexionsschicht, was ebenfalls zur Abweichung in der Ableitung führt. Aus diesen Gründen wird es notwendig, die Optik auf den tatsächlich verwendeten Reflektor in der tatsächlichen Anordnung zu korrigieren, um einen parallelen Austritt des abtastenden Strahles auch in den Randbereichen zu gewährleisten. Damit ist in der Praxis eine enge Begrenzung des Anwendungsbereiches der nach dem genannten Prinzip arbeitenden Meßvorrichtung gegeben. Auch die Auswertung der bei der Abtastung erhaltenen Signale zum Meßergebnis erfordert einen beträchtlichen logistischen Aufwand in einem Rechner, wobei, wie erwähnt, Abschattungszeit, Lage des Reflektors während der Abschattung und weitere Parameter, insbesondere die momentane Winkelgeschwindigkeit zu berücksichtigen sind. Für spezielle Aufgaben kann man hier dem Rechner Speicher zuordnen, in denen tabellarisch die bestimmten Parameterkombinationen zugeordneten Meßwerte festgehalten sind, so daß sie bei der tatsächlichen Messung nur abgefragt werden müssen. Das erfordert bei der Erstellung dieser Speicher wesentliche Vorbereitungen, wobei, wie erwähnt, nur spezielle Meßaufgaben mit einem Meßprogramm gelöst werden können.

Aufgabe der Erfindung ist die Schaffung einer Meßvorrichtung der genannten Art, die bei Vereinfachung des Aufbaues eine vielseitige Anwendung ermöglicht und bei der der Meßbereich den jeweiligen Erfordernissen entsprechend ohne wesentliche Aufwandserhöhung auch groß gewählt werden kann, wobei überdies eine leichte Anpassung an verschiedene zu lösenden Meßaufgaben möglich ist.

Die gestellte Aufgabe wird dadurch gelöst, daß der verstellbare, abstrahlende Teil der Abtasteinheit und ein zugeordneter Aufnahmeteil der den Detektor enthaltenden Empfangseinrichtung parallel zueinander und vorzugsweise synchron, normal oder etwa normal zur Richtung des Laserstrahles innerhalb der Meßfläche verstellbar angeordnet und wenigstens der abstrahlende oder aufnehmende Teil mit einem Linearmeßsystem gekuppelt ist, dessen zugehörige Anzeige- oder Auswertungseinheit als Teil des Meßkreises vom Detektor gesteuert ist.

Durch die erfindungsgemäße Ausführung wird es möglich, die aufwendige Optik der bekannten Abtasteinrichtungen zu vermeiden. Die Breite der Meßfläche hängt dann nur mehr von der Länge der Führungen für den abstrahlenden und empfangenden Teil ab, wobei gleiche Strahlleiteinrichtungen, die im wesentlichen nur aus Umlenkprismen oder Spiegeln bestehen werden, bei Meßvorrichtungen mit verschieden breiten Meßflächen einsetzbar sind. Bekanntlich ist die Länge der Meßfläche in der Praxis durch die Art des verwendeten Lasers und einer allenfalls in den Strahlengang eingeschalteten Fokussierungsoptik begrenzt. Man wird im Normalfall danach trachten, innerhalb der Meßfläche im sogenannten Taillenbereich des Laserstrahles zu arbeiten. Korrekturprobleme höherer Art bei den Spiegeln oder sonstigen Umleitprismen treten nicht auf, da die Relativlage dieser Teile zur Ein- bzw. Ausfallrichtung des Laserstrahles im gesamten Meßbereich gleich bleiben kann.

Theoretisch ist es möglich, den Laser selbst über die Breite der Abtastebene zu verstellen. In der Praxis wird man aber meist eine Ausführung wählen, bei der der Laser feststehend angeordnet ist und der verstellbare, abstrahlende Teil der Abtasteinheit sowie vorzugsweise auch der zugeordnete aufnehmende Teil der Empfangseinrichtung aus Umlenkvorrichtungen für den Laserstrahl, inbesondere Umlenkspiegeln oder Prismen bestehen. Als Linearmeßsystem können Meßsysteme bekannter Ausführung mit optischer, elektrischer, induktiver, kapazitiver oder magnetischer Abtastung eines Maßstabes, vorzugsweise eines Inkrementalmaßstabes, Verwendung finden. Es kann die Wegstrecke von einem Bezugspunkt bis zur Abschattung, die Wegstrecke zwischen Beginn und Ende der Abschattung, die Wegstrecke vom Ende der Abschattung bis zur nächsten Abschattung usw. je nach dem gewählten Meßprogramm vermessen werden, so daß die Maße eines innerhalb der Meßfläche befindlichen Objektes in der Verstellrichtung, aber auch die Lage dieses Objektes innerhalb der Meßfläche direkt vermessen und bei runden Werkstücken der Radius bzw.die Lage der Achse berechnet werden kann. Als Linearmeßsystem kann auch ein von mit dem linear verstellten Teil gekuppelter Drehmelder eingesetzt werden. In manchen Fällen ist es sinnvoll, den abstrahlenden und aufnehmenden Teil mit je einem linearen Meßsystem zu kuppeln, um die Meßmöglichkeiten oder die Genauigkeit der Messung zu vergrößern. Bei Verwendung von zwei linearen Meßsystemen lassen sich Abweichungen des Synchronlaufes des abstrahlenden und aufnehmenden Teiles erfassen und entweder korrigieren oder in einem Rechner des Meßsystems zu Korrekturwerten verarbeiten. Ein asynchroner Lauf wird selbstverständlich nur in ganz kleinen Bereichen auftreten.

Im einfachsten Fall arbeitet bei der beschriebenen Konstruktion der Laserstrahl mit seinen Einrichtungen als verstellbare Lichtschranke, die je nachdem, ob eine Abschattung vorhanden ist oder nicht, die Auswertungseinheit des oder der Linearmeßsysteme steuert. Der Abschattungsgrad bei dem das Steuersignal auftritt, wird gegenüber einem beispielsweise am Sekundärende des Lasers über einen Detektor gewonnenen Bezugssignal definiert.

Dem Prinzip nach können bei der Verwendung als Lichtschranke Gleichlichtlaser und gepulste Laser eingesetzt werden.

Nach einer Weiterbildung ist dem Laser ein Strahlenteiler, insbesondere ein Strahlenteilungsprisma nachgeordnet und die beiden anfallenden Teilstrahlen sind über Abtasteinheiten, denen Empfangseinrichtungen zugeordnet sind, quer, insbesondere senkrecht zueinander in der Abtastebene über die Meßfläche verstellbar. Damit kann man unter Verwendung eines einzigen Lasers das Meßobjekt in der Meßebene aus zwei verschiedenen Richtungen abtasten. Die Abtastung kann gleichzeitig erfolgen, wobei die Lage der abtastenden Teilstrahlen zueinander genau definiert ist. Wahlweise können die Abtasteinheiten für sich oder - jeweils gemeinsam mit den zugehörigen Empfangseinrichtungen - gemeinsam antreibbar sein.

Für die Durchführung von Messungen an schwer zugänglichen Stellen oder an Stellen, in deren Bereich beispielsweise beim Betrieb einer Maschine andere Teile vorhanden oder anzubringen sind, kann man eine Meßvorrichtung verwenden, die zwei an einem Ende starr verbundene Parallelführungen für die verstellbaren Teile der Abtast- und Empfangseinheit aufweist und im Bereich des anderen Endes der Parallelführungen zur Einführung eines Meßobjektes offen ausgebildet ist. Eine solche Meßvorrichtung kann an einer Werkzeugmaschine od. dgl. um eine normal zur Abtastebene und vorzugsweise außerhalb der Meßfläche verlaufende Achse schwenkbar gelagert sein.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigt

Fig. 1 eine erfindungsgemäße Meßvorrichtung schematisiert
       im Schaubild,

Fig. 2 eine ebenfalls schematisierte Draufsicht auf die
       Vorrichtung nach Fig. 1, bei der das Gehäuse nach
       oben offen dargestellt wurde, so daß die wichtigsten
       Teile der Meßvorrichtung sichtbar sind,

Fig. 3 lediglich zur Verdeutlichung der Konstruktion eine
       Parallelführung im Schnitt durch das Gerätebett und

Fig. 4 im Schema eine zweite Meßvorrichtung beim Einsatz an
       einer Drehmaschine in Ansicht.

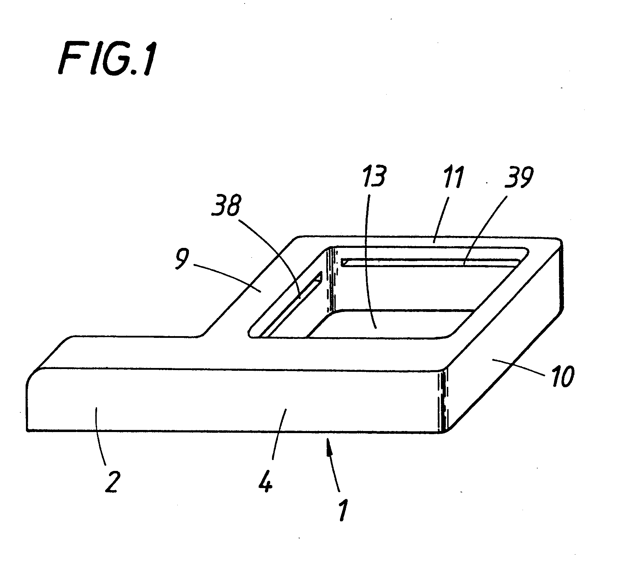

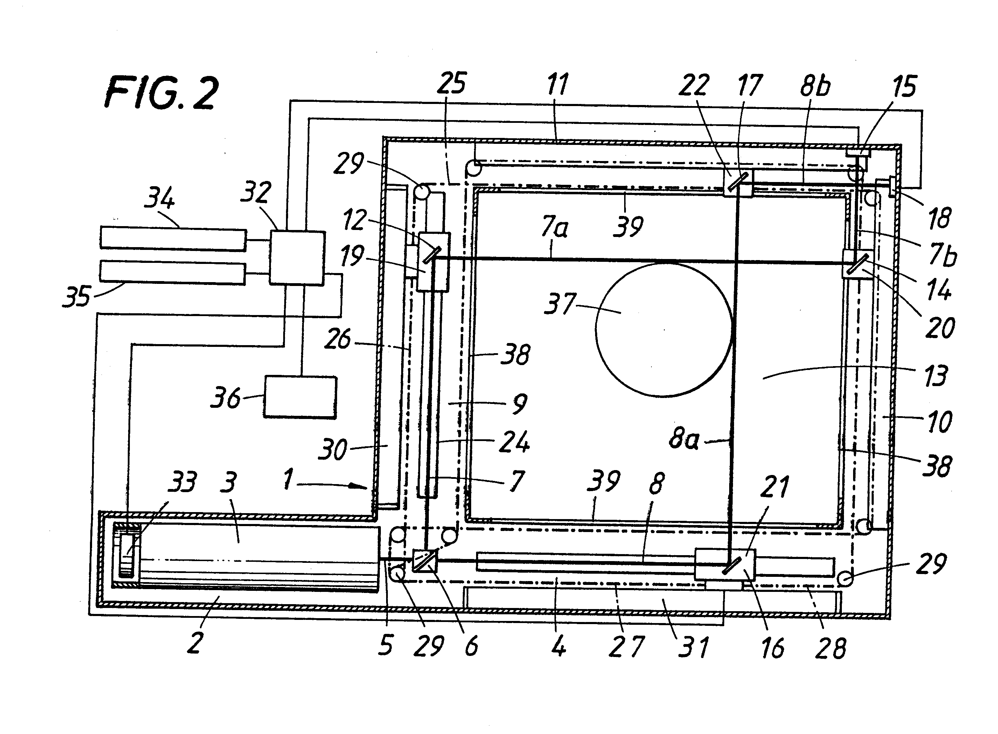

Nach den Fig. 1 bis 3 besitzt ein Gehäuse 1 die
Grundform eines rechteckigen oder quadratischen Rahmens, von
dem der eine Schenkel 2 nach der Seite hin verlängert ist.
Innerhalb dieses Verlängerungsschenkels 2 ist ein Laser 3
untergebracht, der parallel zum unteren Schenkel 4 des
Rahmens 1 einen Laserstrahl 5 aussendet. Dieser Laserstrahl
trifft auf ein Strahlenteilungsprisma 6, in dem er in zwei
Strahlen 7 und 8 aufgeteilt wird, von denen der eine (8)
beim Ausführungsbeispiel der Richtung des Strahles 5 folgt
und der andere innerhalb des Rahmenquerschenkels 9 parallel
zu diesem verläuft. Der andere Rahmenquerschenkel wurde mit
10 und der obere Längsschenkel mit 11 bezeichnet. Der Teilstrahl 7 ist auf ein als Spiegel 12 dargestelltes Umlenkprisma, beispielsweise ein Pentaprisma gerichtet, das ihn
wieder um 90° ablenkt, so daß er als messender Abtaststrahl
7a parallel zu den Rahmenschenkeln 4, 11 über eine Meßfläche 13 tritt. Im Schenkel 10 ist ein weiteres Umlenkprisma 14 vorhanden, das den Strahl 7a wieder um 90° umlenkt, so
daß der Strahlenschenkel 7b zu einem Empfänger 15 abgeleitet
wird. Entsprechende, als Spiegel dargestellte Umlenkprismen
16, 17 und ein Detektor 18 sind für den aus den Strahlenschenkeln 8, 8a, 8b bestehenden Teilstrahl vorhanden.

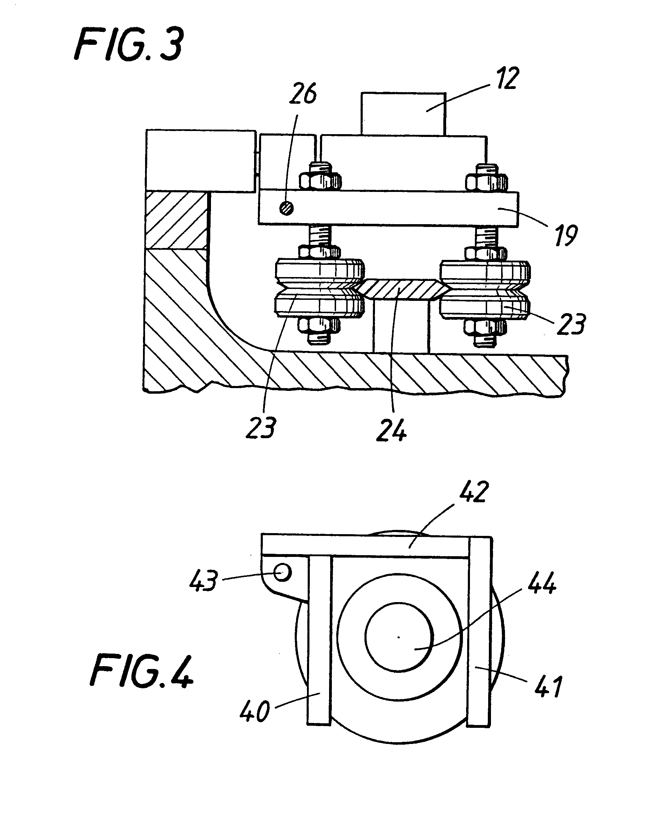

Die Reflektoren 12 und 14 sind je an einem Wägelchen
19, 20 und die Reflektoren 16 und 17 an je einem Wägelchen
21 und 22 befestigt. Jedes dieser Wägelchen 19 - 22 ist mit
Rollen 23 (siehe Fig. 3) spielfrei an einer geradlinigen Führungsschiene 24 abgestützt. Die Wägelchen 19 und 20 sowie die Wägelchen 21 und 22 sind über Stahlbänder, Drähte od. dgl. 25, 26 bzw. 27, 28 verbunden. Die Bänder oder Drähte 25 bis 28 sind über Rollen 29 geführt und mehrfach umgeleitet, so daß jeweils das Stahlband 25 usw. von der Oberseite des Wägelchens 19 zur Unterseite des Wägelchens 20, das Stahlband 26 von der Unterseite (bezogen auf die Lage des Wägelchens zum Querschenkel 4) des Wägelchens 19 zur Oberseite des Wägelchens 20 geführt ist und eine entsprechende Überkreuzung auch bei den Wägelchen 21, 22 vorgesehen ist. Damit können die Wägelchen 19 und 20 bzw. 21, 22 nur paarweise und synchron in der jeweils gleichen Richtung verstellt werden. Es ist auch möglich, eine Antriebskupplung vorzusehen, so daß alle vier Wägelchen gleichzeitig verstellt werden. Bei der Verstellung wird wegen der damit verbundenen Verstellung der Reflektoren, 12, 14, 16, 17 auch der abtastende Teilstrahl des Laserstrahles 7a bzw. 8a über die Meßfläche 10 verstellt.

Mit den Wägelchen 19 und 21 ist jeweils der verstellbare Teil eines Linearmeßsystems 30 bzw. 31 verbunden. Jedes Linearmeßsystem kann aus einem Inkrementalmaßstab und einer über diesen Maßstab verstellbaren Abtasteinheit bestehen, die im Falle einer optoelektronischen Abtastung den Inkrementalmaßstab durch ein Gitter hindurch abtastet, wobei das durch Gitter und Maßstab geführte, entsprechend der Relativverstellung des Gitters gegenüber dem Maßstab modulierte Licht auf photoelektrische Empfänger fällt, in elektrische Signale umgewandelt und einer Auswertungseinheit 32 zugeführt wird. Diese Auswertungseinheit 32 erhält auch die Signale der Detektoren 15, 18 und im Bedarfsfall ein Referenzsignal von einem am Sekundärende des Lasers 3 angebrachten Detektor 33. Anzeigeeinheiten 34, 35 ermöglichen die Darstellung des jeweiligen Meßergebnisses. Über ein Tastenfeld 36 können Steuerprogramme für die Auswertungseinheit 32 eingegeben werden. Je nach dem gewählten Programm kann man auf den Anzeigen 34, 35 die Abstände eines in der Meßfläche befindlichen Objektes 37 von den Rändern der Meßfläche 13 aufscheinen lassen und/oder die Abmessungen des Objektes 37 in den beiden Abtastrichtungen anzeigen. Am Gehäuse 1 sind an den Innenseiten der Schenkel 4, 9, 10, 11 Schlitze 38, 39 für den Durchtritt der Strahlen 7a, 8a vorhanden.

Man kann die Linearmeßsysteme 30, 31, die hier entlang der Schenkel 4, 9 vorgesehen sind, auch durch zwei Drehmelder ersetzen, die beispielsweise von den Bändern 26 und 27 angetrieben werden. Bei einer spielfreien Kupplung der Systeme und eindeutig definierten Endlagen der Wägelchen in diesen Systemen könnte man auch mit einem einzigen Drehmelder für beide Systeme das Auslangen finden.

Fig. 4 zeigt, daß eine Meßvorrichtung mit zwei den Schenkeln 9, 10 entsprechenden Schenkeln 40, 41, in denen die Prismen 12, 14 geführt und die Längenmeßeinrichtung untergebracht ist, auch nur einen Verbindungsschenkel 42 aufzuweisen braucht. Diese Meßvorrichtung kann an einer Drehmaschine um eine normal zur Abtastebene und außerhalb der Meßfläche parallel zur Maschinenachse verlaufende Achse 43 ein- und ausschwenkbar angebracht sein, so daß man im Bedarfsfall ein rundes Werkstück 44 ausmessen kann.

Ähnliche Meßeinrichtungen können auch zu Toleranzmessungen bei zylindrischen, durch das Meßfeld geführten Werkstücken eingesetzt werden.

Es ist auch möglich, bei optoelektronischer Abtastung in den Linearmeßsystemen für die notwendige Beleuchtung ausgeblendete Teilbereiche des Laserstrahles selbst zu verwenden.

0214954

Patentansprüche:

1.    Meßvorrichtung zur berührungslosen Bestimmung von Maßen und/oder der Lage bzw. der Abstände von Objekten (37, 44), insbesondere Werkstücken, nach dem Schattenbildverfahren, mit einer Abtasteinrichtung zur relativen Verstellung des von einem Laser (3) abgegebenen Laserstrahles (7a, 8a) von dem einen Rand her über eine Meßfläche (13) in der durch den Laserstrahl und die Verstellrichtung definierten Abtastebene und einer der Meßfläche nachgeordneten Empfangseinrichtung (14, 17) für den Laserstrahl (7a, 8a) mit einem auf die Abschattung des Laserstrahles (7a, 8a) empfindlichen Detektor (15, 18), der einen Meßkreis (32, 34, 35) steuert, dadurch gekennzeichnet, daß der verstellbare, abstrahlende Teil (12, 16) der Abtasteinheit und ein zugeordneter Aufnahmeteil (14, 17) der den Detektor (15, 18) enthaltenden Empfangseinrichtung parallel zueinander und vorzugsweise synchron, normal oder etwa normal zur Richtung des Laserstrahles (7a, 8a) innerhalb der Meßfläche (13) verstellbar angeordnet und wenigstens der abstrahlende oder aufnehmende Teil (12, 16 bzw. 14, 17) mit einem Linearmeßsystem (30, 31) gekuppelt ist, dessen zugehörige Anzeige- oder Auswerteeinheit (32 bis 36) als Teil des Meßkreises vom Detektor (15, 18) gesteuert ist.

2.    Meßvorrichtung nach Anspruch 1, dadurch gekennzeichnet, daß der Laser (3) feststehend angeordnet ist und der verstellbare, abstrahlende Teil (12, 16) der Abtasteinheit sowie vorzugsweise auch der zugeordnete, aufnehmende Teil (14, 17) der Empfangseinrichtung aus Umlenkvorrichtungen für den Laserstrahl (7, 8), insbesondere Umlenkspiegeln oder -prismen bestehen.

3.    Meßvorrichtung nach den Ansprüchen 1 und 2, dadurch gekennzeichnet, daß dem Laser (3) ein Strahlenteiler (6), insbesondere ein Strahlenteilungsprisma nachgeordnet ist und die beiden anfallenden Teilstrahlen (7, 8) über Abtasteinheiten (12, 16), denen Empfangseinrichtungen (14, 15, 17, 18) zugeordnet sind, quer, insbesondere senkrecht zueinander in der Abtastebene über die Meßfläche (13) verstellbar sind.

4.      Meßvorrichtung nach Anspruch 3, dadurch gekennzeichnet, daß die beiden Abtasteinheiten (12, 16) mit den zugehörigen Empfangseinrichtungen (14, 17) gemeinsam antreibbar sind.

5.      Meßvorrichtung nach Anspruch 1 oder 2, dadurch gekennzeichnet, daß sie zwei an einem Ende starr verbundene Parallelführungen (40, 41) für die verstellbaren Teile der Abtast- und Empfangseinheit aufweist und im Bereich des anderen Endes der Parallelführungen zur Einführung eines Meßobjektes offen ausgebildet ist.

6.      Meßvorrichtung nach Anspruch 5, dadurch gekennzeichnet, daß sie an einer Werkzeugmaschine od. dgl. um eine normal zur Abtastebene und vorzugsweise außerhalb der Meßfläche verlaufende Achse (43) schwenkbar gelagert ist.

# FIG.1

FIG.2

0214954

**FIG.3**

**FIG.4**